# EUROPEAN PATENT APPLICATION

(11) **EP 2 196 433 A1**
(43) Date of publication of application: **16.06.2010**
(21) Application number: 09176249.2
(22) Date of filing: 17.11.2009
(51) Int. Cl.: C01B 3/06

(54) **Method for generation of hydrogen gas**

(30) Priority: 10.12.2008 US 201390 P
(71) Applicant: Rohm and Haas Company, Philadelphia, Pennsylvania 19106-2399 (US)
(72) Inventor: Najim, Joseph, Peabody MA 01960 (US); Yamamoto, John Hiroshi, New Britain, PA 18901 (US)
(74) Representative: Buckley, Guy Julian

(57) **Abstract**

A method for generation of hydrogen with reduced foaming by combining with water a solid composition containing a borohydride compound and a base in the presence of a transition metal catalyst.

## Description

This invention relates to a method for generation of hydrogen gas from a borohydride-containing formulation. This method is useful for hydrogen generation in fuel cells.

Borohydride-containing compositions are known as hydrogen sources for hydrogen fuel cells, usually in the form of aqueous solutions. Solid borohydride-containing compositions also have been used. For example, U.S. Pub. No. 2005/0238573 discloses the use of solid sodium borohydride, which is combined with aqueous acid to produce hydrogen. However, the problem of excessive foaming during the generation of hydrogen is not adequately addressed by this reference.

The problem addressed by this invention is to find a method for generation of hydrogen gas from a borohydride-containing formulation that allows hydrogen generation with reduced foaming.

### STATEMENT OF INVENTION

The present invention provides a method for generation of hydrogen comprising adding a liquid comprising water to a solid composition comprising from 5 wt % to 40 wt % of at least one base, and 60 wt % to 95 wt % of at least one borohydride compound; wherein at least one of the solid composition and the liquid contains at least one transition metal salt from groups 8, 9 and 10; and wherein the liquid contains less than 5 wt % acid.

### DETAILED DESCRIPTION

Percentages are weight percentages (wt %) and temperatures are in °C, unless specified otherwise. An "acid" is a compound with a pKₐ no greater than 6. An "organic acid" is an acid which contains carbon. An "inorganic acid" is an acid which does not contain carbon. A "base" is a compound with a pKₐ of at least 8 which is solid at 50°C. pKₐ values referred to herein are those found in standard tables of pKₐ values, usually measured at 20-25°C.

In some embodiments, the amount of borohydride compound(s) in the solid composition is at least 70%, alternatively at least 75%, alternatively at least 78%, alternatively at least 80%, alternatively at least 81%, alternatively at least 82%; in some embodiments the amount of borohydride compound(s) is no more than 92%, alternatively no more than 90%, alternatively no more than 88%, alternatively no more than 85%, alternatively no more than 83%; and in some embodiments the amount of base(s) is no more than 30%, alternatively no more than 25%, alternatively no more than 22%, alternatively no more than 20%, alternatively no more than 19%. In some embodiments of the invention, the amount of base in the solid composition is at least 6%, alternatively at least 8%, alternatively at least 10%, alternatively at least 12%. Preferably, the borohydride compound is a metal salt which has a metal cation from groups 1, 2, 4, 5, 7, 11, 12 or 13 of the periodic table, or a mixture thereof. In one embodiment, the borohydride compound is an alkali metal borohydride or mixture thereof alternatively it comprises sodium borohydride (SBH) or potassium borohydride (KBH) or a mixture thereof, alternatively sodium borohydride. Preferably, the base is an alkali metal hydroxide or mixture thereof, alkali metal alkoxide or alkaline earth alkoxide or combination thereof; alternatively it is an alkali metal hydroxide or sodium or potassium methoxide, or mixture thereof; alternatively sodium, lithium or potassium hydroxide or sodium or potassium methoxide, or a mixture thereof; alternatively sodium hydroxide or potassium hydroxide; alternatively sodium hydroxide. More than one alkali metal borohydride and more than one base may be present.

A liquid comprising water is added to the solid composition, the liquid being either water itself or an aqueous solution. In some embodiments of the invention, the liquid contains at least 82% water, alternatively at least 85% water, alternatively at least 88%, alternatively at least 90%. The liquid contains less than 5% acid. Examples of acids include, e.g., organic acids and inorganic acids. Examples of organic acids include carboxylic acids, e.g., C₂-C₅ dicarboxylic acids, C₂-C₅ hydroxy carboxylic acids, C₂-C₅ hydroxy di- or tri-carboxylic acids or a combination thereof, e.g., malic acid, citric acid, tartaric acid, malonic acid and oxalic acid. Examples of inorganic acids include concentrated mineral acids, e.g., hydrochloric acid, sulfuric acid and/or phosphoric acid. In some embodiments of the invention, the liquid contains less than 4% acid, alternatively less than 3%, alternatively less than 2%, alternatively less than 1%, alternatively less than 0.5%. In some embodiments of the invention, the pH of the liquid is no less than 7, alternatively no less than 6.5, alternatively no less than 6, alternatively no less than 5.5, alternatively no less than 5, alternatively no less than 4.5; alternatively no more than 13, alternatively no more than 12, alternatively no more than 11, alternatively no more than 10, alternatively no more than 9. In some embodiments, the liquid contains less than 1% inorganic acid, alternatively less than 0.5%, alternatively less than 0.2%, alternatively less than 0.1%.

The solid composition of this invention may be in any convenient form. Examples of suitable solid forms include powder, granules, and compressed solid material. Preferably, powders have an average particle size less than 80 mesh (177 µm). Preferably, granules have an average particle size from 10 mesh (2000 µm) to 40 mesh (425 µm). Compressed solid material may have a size and shape determined by the equipment comprising the hydrogen generation system. In one embodiment of the invention, compressed solid material is in the form of a typical pellet or caplet used in other fields. The compaction pressure used to form compressed solid material is not critical.

At least one of the solid composition and the liquid contains at least one substance that catalyzes hydrolysis of borohydride, i.e., salts of transition metals in groups 8, 9 and 10; such as Co, Ru, Ni, Fe, Rh, Pd, Os, Ir, Pt, or mixtures thereof; and borides of Co and/or Ni. In one embodiment of the invention, a transition metal salt is soluble in water at 20°C in an amount at least 1 g/100 g water, alternatively at least 2 g/100 g water, alternatively at least 5 g/100 g water, alternatively at least 10 g/100 g water, alternatively at least 20 g/100 g water. A particularly preferred catalyst is cobalt (II) chloride. Preferably, no transition metals are present as zero-valent metals. In the present invention, transition metals or their salts are not present on insoluble solid supports, e.g., carbon, silica, alumina, ion exchange resins or other resin supports, or insoluble metal salts, e.g., barium sulfate or calcium carbonate. For purposes of this exclusion, "insoluble" means having a water solubility of less than 0.1 g/100 g water at 20°C. If the catalyst is present in the solid composition, preferably the amount of catalyst is no more than 15%. In some embodiments of the invention, the amount of catalyst in the solid composition is at least 0.5%, alternatively at least 1%, alternatively at least 2%, alternatively at least 3%, alternatively at least 4%, alternatively at least 4.5%, alternatively at least 5%; in some embodiments the amount is no more than 15%, alternatively no more than 14%, alternatively no more than 13%, alternatively no more than 12%, alternatively no more than 11%, alternatively no more than 10%, alternatively no more than 9%, alternatively no more than 8%, alternatively no more than 7%, alternatively no more than 6%, alternatively no more than 5%. In some embodiments of the invention, when the catalyst level in the solid composition is at least 3%, the level in the liquid is no more than 5%; alternatively when the level in the solid is at least 4%, the level in the liquid is no more than 3%; alternatively when the level in the solid is at least 5%, the level in the liquid is no more than 2%. In some embodiments of the invention, the liquid contains no more than 2% catalyst, alternatively no more than 1% catalyst, alternatively no more than 0.5%, alternatively no more than 0.1%. When the catalyst is present primarily in the liquid, in some embodiments the concentration is at least 3%, alternatively at least 4%, alternatively at least 4.5%, alternatively at least 5%, alternatively at least 8%, alternatively at least 9%; in some embodiments the concentration is no more than 20%, alternatively no more than 15%, alternatively no more than 12%; in these embodiments the solid composition preferably contains no more than 2% catalyst, alternatively no more than 1%, alternatively no more than 0.5%, alternatively no more than 0.2%, alternatively no more than 0.1%, alternatively no more than 0.05%. In some embodiments, the sum of the level of catalyst in the solid composition and the level in the liquid is no more than 15%, alternatively no more than 14%, alternatively no more than 13%, alternatively no more than 12%, alternatively no more than 11%, alternatively no more than 10%, alternatively no more than 9%, alternatively no more than 8%; in some embodiments, the sum is at least 4%, alternatively at least 4.5%, alternatively at least 5%. In some embodiments of the invention, the liquid added to the solid composition contains less than 5% of anything other than water and catalyst, alternatively less than 4%, alternatively less than 3%, alternatively less than 2%, alternatively less than 1%, alternatively less than 0.5%.

In some embodiments of the invention, the water content of the solid composition is no more than 2%, alternatively no more than 1%, alternatively no more than 0.5%, alternatively no more than 0.3%, alternatively no more than 0.2%, alternatively no more than 0.1%. In some embodiments of the invention in which the base comprises potassium hydroxide, the water content may be higher than these limits, providing the water is bound to the potassium hydroxide and the base does not melt below 50°C. In some embodiments of the invention, the solid composition contains no more than 20% of anything other than the borohydride compound and the base, alternatively no more than 15%, alternatively no more than 10%, alternatively no more than 5%, alternatively no more than 3%. Preferably, the solid composition contains no more than 10% of anything other than the borohydride compound, the base and the transition metal salt, alternatively no more than 5%, alternatively no more than 3%, alternatively no more than 2%, alternatively no more than 1%. Other possible constituents of the solid composition include, e.g., catalysts, anti-foam agents and surfactants. In some embodiments of the invention, the solid composition is substantially or completely free of metal hydrides other than borohydrides, e.g., alkali metal or alkaline earth metal hydrides, MH or MH₂, respectively; and aluminum hydride compounds, e.g., MAlH₄. The term "substantially free of" means containing less than 1%, alternatively less than 0.5%, alternatively less than 0.2%, alternatively less than 0.1%.

Preferably, the temperature of the solid composition and the liquid are in the range from -60°C to 100°C, alternatively from -50°C to 50°C, alternatively from -40°C to 45°C, alternatively from -30°C to 45°C, alternatively from -20°C to 40°C. When the liquid activator comprises almost entirely water, temperatures below 0°C are attainable by including anti-freeze agents, such as alcohols or glycols in the aqueous solution. Aqueous catalyst solutions also may include anti-freeze agents. The rate of addition may vary depending on the desired rate of hydrogen generation. Preferred addition rates are in the range from 10 to 300 uL/min to generate a flow rate of 5 to 300 mL/min of hydrogen gas. Preferably, the mixture formed when the solid composition contacts the aqueous solution is not agitated.

The method of this invention allows generation of hydrogen at a useful rate with the capability of stopping said generation relatively quickly after stopping the addition of the aqueous solution. This capability is important in hydrogen fuel cells, where power generation on demand is a key concern. Inability to stop the flow of hydrogen is detrimental to rapid on/off operation of the fuel cell. Linearity of hydrogen generation over time and/or the amount of aqueous solution added is also an important capability in a hydrogen fuel cell.

### EXAMPLES

Samples of the solid fuel compositions listed below in Table 1 were prepared in powder and/or pellet form. The required amounts of SBH powder, metal hydroxide powder and catalyst were mixed in a coffee grinder for two minutes or placed in a polypropylene bottle and shaken by hand for 10 minutes. Pellets were produced in caplet form under a pressure of 10,000 psi (68.9 kPa). The indicated liquid activator (all are aqueous solutions) was added at ambient temperature (ca. 20-25°C) at a rate of 250 uL/min for 10 minutes, followed by 10 minutes of observation without further addition, and then this cycle was repeated until 60 minutes had elapsed. The liquid activator was pumped via a syringe pump into a graduated cylinder capped with a gas outlet and septum with an 18-gauge needle. The outlet was connected to either a wet test meter or a water displacement apparatus connected to a balance. The foam volume was observed for each sample at 1 minute intervals. The maximum foam volume reading, and the sum of all observed foam volume readings, are presented in Table 1.

**Table 1: Foam Height Data from Borohydride Hydrolysis**

| Solid Fuel | liquid activator | max. foam volume (mL) | sum of foam volume | max. foam volume (mL) | sum of foam volume |
|---|---|---|---|---|---|
| | | Powder | | Pellet | |
| 100% SBH | 25% malic acid | 112 | 3574 | 66 | 2466 |
| 100% SBH | 6 % CoCl₂ | 120 | 2530 | | |
| 100% SBH | 9% CoCl₂ | 60 | 1915 | | |
| 94% SBH, 6% CoCl₂ | water | 121 | 1149 | | |
| 85% SBH, 15% NaOH | 25% malic acid | 68 | 2222 | 50 | 1672 |
| 85% SBH, 15% NaOH | 30% malic acid | 100 | 2754 | | |
| 95% SBH, 5% NaOH | 30% malic acid | | | 100 | 3449 |
| 95% SBH, 5% NaOH | 25% malic acid | 72 | 2874 | 50 | 2575 |
| 75% SBH, 25% NaOH | 25% malic acid | 56 | 1710 | | |
| 65% SBH, 35% NaOH | 25% malic acid | 56 | 1650 | | |
| 80% SBH, 14% KOH, 6% CoCl₂ | 25% malic acid | 58 | 1671 | | |
| 80% SBH, 14% NaOH, 6% CoCl₂ | 15% malic acid | 80 | 2306 | | |
| 82% SBH, 14% NaOH, 4% CoCl₂ | 15% malic acid | 70 | 2585 | | |
| 74%SBH, 18% KOH, 8% CoCl₂ | water | 28 | 1820 | | |
| 80% SBH, 14% KOH, 6% CoCl₂ | water | 30 | 1195 | 22 | 984 |
| 80% SBH, 14% NaOH, 6% CoCl₂ | water | | 898 | 28 | 960 |
| 80% KBH, 14% NaOH, 6% CoCl₂ | water | 27 | 363 | | |
| 80% KBH, 14% NaOH, 5% CoCl₂ 1% RuCl₃ | water | | | 24 | 1150 |
| 86% SBH, 14% KOH | 10% CoCl₂ | 28 | 1172 | | |
| 80% KBH, 8% KOH, 12% CoCl₂ | water | 28 | 1358 | | |
| 75% SBH, 25% NaOH | 10 % CoCl₂ | 30 | 1210 | | |
| 87% SBH. 13% NaOH | 9% CoCl₂ | 30 | | | |

| | | | | | |
|---|---|---|---|---|---|
| Notes: 1. Samples in upper part of table are comparative, lower are within scope of invention 2. The sum of foam volume is the total of the foam volume measurements. | | | | | |

The maximum foam volume (3^{rd} and 5^{th} columns) is the primary concern in a hydrogen generation apparatus. Table 1 shows that this measurement is markedly lower for the compositions of this invention, as compared with other compositions. The sum of foam volume is a secondary consideration, and is a measure of how quickly the foam volume decreases after reaching its maximum level.

Pure SBH powder and 87% SBH/13% NaOH were tested also with 3% CoCl₂ as the liquid activator, but these combinations produced hydrogen at a very low rate of only about 20 mL/min at the relatively high addition rate (250 uL/min). This low rate is considered unacceptable for a practical commercial device. SBH or SBH/MOH mixtures without catalyst (M=alkali or alkaline earth metal) with a liquid activator completely lacking either catalyst or acid would generate hydrogen at even slower rates, and therefore such mixtures were not tested.

Water containing 2% NaOH was added to a powder mixture containing 80% SBH, 14% NaOH, 6% CoCl₂, with a resulting maximum foam volume of 50 mL, and a sum of foam volume of 1260.

## Claims

1. A method for generation of hydrogen, said method comprising:
adding a liquid comprising water to a solid composition comprising from 5 wt % to 40 wt % of at least one base, and 60 wt % to 95 wt % of at least one borohydride compound;
wherein at least one of the solid composition and the liquid contains at least one transition metal salt from groups 8, 9 and 10; and wherein the liquid contains less than 5 wt % acid.

2. The method of claim 1 in which said at least one borohydride compound is at least one alkali metal borohydride, and said at least one base is sodium, lithium or potassium hydroxide, sodium or potassium methoxide, or a combination thereof.

3. The method of claim 2 in which in which the solid composition comprises from 5 wt % to 25 wt % of said at least one base, from 70 wt % to 85 wt % of said at least one borohydride compound, and from 2 wt % to 15 wt % of said at least one transition metal salt from groups 8, 9 and 10.

4. The method of claim 3 in which said at least one alkali metal borohydride is sodium borohydride, potassium borohydride or a combination thereof.

5. The method of claim 4 in which the liquid contains no more than 2 wt % of said at least one transition metal salt from groups 8, 9 and 10.

6. The method of claim 5 in which the solid composition comprises from 6 wt % to 22 wt % of said at least one base, from 70 wt % to 85 wt % of said at least one borohydride compound, and from 4 wt % to 14 wt % of said at least one transition metal salt from groups 8, 9 and 10; and wherein the liquid contains no more than 0.5 wt % of said at least one transition metal salt from groups 8, 9 and 10.

7. The method of claim 2 in which the solid composition comprises from 8 wt % to 30 wt % of said at least one base, from 70 wt % to 92 wt % of said at least one borohydride compound.

8. The method of claim 7 in which said at least one transition metal salt from groups 8, 9 and 10 is present in the liquid at a level from 3 wt % to 15 wt %.

9. The method of claim 8 in which said at least one alkali metal borohydride is sodium borohydride, potassium borohydride or a combination thereof.

10. The method of claim 9 in which the solid composition contains no more than 0.5 wt % of said at least one transition metal salt from groups 8, 9 and 10; the liquid contains less than 1 wt % acid; and the liquid contains said at least one transition metal salt at a level from 5 wt % to 15 wt %.
